# EUROPÄISCHE PATENTSCHRIFT

(11) **EP 1 697 667 B1**
(45) Veröffentlichungstag und Bekanntmachung des Hinweises auf die Patenterteilung: **22.08.2007**
(21) Anmeldenummer: 04816279.6
(22) Anmeldetag: 20.12.2004
(51) Int. Cl.: F16K 1/44, F16K 31/06

(54) **GASREGEL -UND SICHERHEITSVENTIL**
GAS CONTROL VALVE AND SAFETY VALVE
SOUPAPE DE REGULATION DE GAZ ET DE SURETE

(30) Priorität: 23.12.2003 DE 10361918
(43) Veröffentlichungstag der Anmeldung: 06.09.2006
(73) Patentinhaber: Saia-Burgess Dresden GmbH, 01257 Dresden (DE)
(72) Erfinder: ECKHOLT, Karl, 01159 Dresden (DE); ROSCHKE, Thomas, 01477 Arnsdorf (DE)
(74) Vertreter: Grüneberg, Marcus
(86) Internationale Anmeldenummer: PCT/DE2004/002829
(87) Internationale Veröffentlichungsnummer: WO 2005/061933

(56) Entgegenhaltungen:
- DE-A1- 1 778 449
- DE-A1- 10 306 001
- DE-C1- 10 114 175

## Beschreibung

Die Erfindung betrifft ein integriertes Gasregel- und Sicherheitsventil für Brenner einer modulierbaren Gasheizeinrichtung, dass zur Anpassung an eine veränderliche Wärmelast und zur schlagartigen Abschaltung des Brenngasstromes, insbesondere bei zur Wohnraumbeheizung und Warmwasserversorgung eingesetzten Gasthermen, Verwendung findet.

Stand der Technik ist eine Einheit von einem Modulationsventil mit zwei in Serie geschalteten voneinander unabhängigen Sicherheitsventilen. Das Modulationsventil hierbei wird von einem Proportionalmagneten oder einem Schrittmotor feinfühlig verstellt. Die beiden unabhängig voneinander wirkenden Sicherheitsventile werden mittels Elektromagneten betätigt und im stromlosen Zustand von Rückstellfedern verschlossen.

Ein erster bekannter Ansatz zur Vermeidung des hohen Aufwandes von drei Aktoreinheiten, z. B. einen Schrittmotor und 2 Elektromagnete pro Gasregelund Sicherheitsventil, ist die Integration einer Rückstellfeder in den Modulationsventilantrieb. Damit kann ein Sicherheitsventil entfallen und es verbleiben lediglich noch zwei Aktoreinheiten pro Gasventil.

In der DE 101 14 175 C1 ist dazu ein Koaxialmagnetventil offenbart, das zwei koaxial zueinander positionierte Schließelemente aufweist. Die Schließelemente weisen jeweils einen Ventilteller auf, wobei der äußere Ventilteller den inneren Ventilteller ringförmig umgibt. Beide Schließelemente werden durch einen Magnetantrieb mit zwei axial übereinander angeordneten und jeweils eine Spule aufweisenden Magnetkreisen angetrieben. Die Magnetkreise wirken dabei mit zwei axial übereinander angeordneten Ankern zusammen, von denen der eine mit dem inneren Ventilteller und der andere mit dem äußeren Ventilteller verbunden ist, und der Anker des äußeren Ventiltellers von einer den inneren Ventilteller mit seinem Anker verbindenden Schubstange durchgriffen wird. < DE 101 14 175 C1 offenbart ein Gasregel- und Sicherheitsventil gemäß dem oberbegriff der unabhängigen Ansprüche 1 und 5.>

In der mit DE 198 26 076 C1 offenbarten Erfindung wird ein Doppelsicherheitsventil beschrieben. Hierbei umgibt der in Durchflussrichtung des Doppelsicherheitsventils erste (äußere) Ventilteller den zweiten (inneren) Ventilteller, so dass beide Ventilsitze zu einem gemeinsamen Ventilsitz zusammengefasst sind und dieser Ventilsitz die einzige Ventilöffnung umgibt. Bei diesem Doppelsicherheitsventil ist ferner eine Spule vorgesehen, die auf einen mit dem inneren Ventilteller verbundenen Anker wirkt. Der äußere Ventilteller hintergreift den inneren Ventilteller in Schließrichtung und wird daher beim Öffnen des inneren Ventiltellers von diesem mitgenommen. Nachteilig an dieser Erfindung ist, dass die beiden Ventilteller somit nur gemeinsam geöffnet werden, und eine voneinander unabhängige Arbeitsweise der beiden Stellglieder nicht gegeben ist.

In der DE 103 06 001 A1 ist eine Doppelabsperr- und Regelarmatur mit zwei unabhängig voneinander wirkenden Verschlussgliedern offenbart. Die Verschlussglieder sind hierbei koaxial zueinander positioniert und sitzen auf unterschiedlichen Ventilsitzen auf. Beiden Verschlussgliedern ist jeweils eine Schließfeder zugeordnet, wobei beide Schließfedern im Bereich der Ventilsitze platziert sind. Zum Antrieb beider mit jeweils einem Anker gekoppelten Verschlussglieder ist ein zweistufiger Magnet, bestehend aus zwei in Bewegungsrichtung der Verschlussglieder hintereinander angeordneten Erregerspulen, vorgesehen. Hierbei sind für die beiden Anker entweder ein gemeinsames Magnetgehäuse oder aber zwei voneinander getrennte Magnetgehäuse vorgesehen. Des Weiteren kann eine in einem gemeinsamen Magnetgehäuse für beide Anker platzierte Hubstange vorgesehen werden, die mit einem Anker durch Schrumpfsitz gekoppelt ist und durch den als Hohlanker ausgebildeten zweiten Anker geführt ist.

Des Weiteren ist aus der DE 195 25 384 C2 ein Doppel-Sicherheitsmagnetventil mit zwei Stellgliedern bekannt. Die beiden Stellglieder sind auf einer gemeinsamen Achse, vorzugsweise übereinander, angeordnet, wobei das erste Stellglied als Magnetanker einen Hohlanker aufweist, in welchen der Anker des zweiten Stellglieds längsverschiebbar entlang der gemeinsamen Achse hineinragt und wobei nur ein einziger Magnetantrieb für beide Stellglieder vorgesehen ist, in den der Hohlanker und der Anker hinein ragen. Obwohl mit diesem Doppelsicherheitsventil bereits eine relativ kompakte Bauweise erzielt wird, ist auf Grund der axial sowohl verschiebbaren als auch hintereinander angeordneten Ventilteller bzw. Stellelemente die axiale Bauhöhe groß.

Als besonders kritisch bei vorbekannten Gasventilen mit nur zwei Aktoreinheiten ist die Tatsache zu nennen, dass die innere Gasdichtheit auf Grund der sehr engen räumlichen Anordnung der Aktoreinheiten und gegebenenfalls durch eine Überlagerung der Stellwege der Drosselkörper nicht oder nicht vollständig gewährleistet ist.

Als weitere Nachteile des Standes der Technik sind die hohen Kosten bei der Fertigung der Gasregel- und Sicherheitsventile und der erhebliche Platzbedarf bei der Einbindung bzw. Installation der Gasregel- und Sicherheitsventile in kompakte Gasheizeinrichtungen, wie z. B: wandhängende Gasthermen, zu nennen.

Aufgabe der Erfindung ist es, ein Gasregel- und Sicherheitsventil für Brenner einer modulierbaren Gasheizeinrichtung vorzuschlagen, bei dem die funktionsbedingten und sicherheitstechnischen Bauteile auf engsten Bauraum konzentriert angeordnet werden und bei dem unter Tolerierung einer zulässigen Leckrate sowohl die innere als auch die äußere Gasdichtheit dauerhaft sichergestellt sind. Des Weiteren soll die Erfindung eine voneinander unabhängige Funktionsweise der funktionsbedingten und sicherheitstechnischen Bauteile sicherzustellen.
Die Aufgabe wird durch die Merkmale des Gasregel- und Sicherheitsventils für Brenner einer modulierbaren Gasheizeinrichtung gemäß Patentanspruch 1 und Patentanspruch 5 gelöst. Weitere vorteilhafte Ausgestaltungen sind in der Beschreibung und den Zeichnungen enthalten und Gegenstand der zugehörigen Unteransprüche.

Erfindungsgemäß ist vorgesehen, dass das Gasregel- und Sicherheitsventil für Brenner einer modulierbaren Gasheizeinrichtung mindestens zwei in einem Gehäuse zwischen einem Einlasskanal und einem Auslasskanal koaxial zueinander positionierte und axial zueinander beabstandete Schließelemente aufweist, die unabhängig voneinander jeweils mittels eines zugehörigen Federelements im stromlosen Zustand schlagartig das Gasregel- und Sicherheitsventil verschließen. Das erste äußere, zusätzlich zur Modulation des Gasstromes dienende Schließelement weist eine als Spindel eines Linearantriebs ausgebildete Antriebsachse auf, bei der an ihrem der Ventilseite des Gasregel- und Sicherheitsventils zugewandten Ende ein Drosselkörper und auf der Antriebsseite des Gasregel- und Sicherheitsventils das erste Federelement platziert sind. Das zwischen dem ersten Federelement und dem Drosselkörper angeordnete zweite, innere Schließelement weist hingegen einen mit einem Hohlanker verbundenen Verschlusskörper auf, der zentrisch von der Antriebsachse durchgriffen wird, und wobei der Hohlanker in einem zylinderartigen Hohlraum beweglich angeordnet ist. Dieser Hohlraum ist von einer als Teil eines Magnetantriebs ausgebildeten Erregerwicklung des Hohlankers umgeben.

Der Vorteil dieser Erfindung besteht darin, dass durch die vollständige mechanische Entkopplung der beiden auf engstem Bauraum angeordneten Schließelemente die zur Sicherheit beitragende innere Gasdichtheit, insbesondere im Schließzustand, des Gasregel- und Sicherheitsventils gewährleistet ist.

Nach der Konzeption der Erfindung sind zwischen dem Einlasskanal und dem Auslasskanal eine Strömungskammer sowie ein sich konzentrisch um die Strömungskammer zumindest teilweise erstreckender Ringspalt vorgesehen. Der Ringspalt und die Strömungskammer werden hierbei wechselseitig für die Einströmung und die Ausströmung des Gases in den sowie aus dem Drosselbereich genutzt. Die Strömungskammer sowie der sich konzentrisch um die Strömungskammer zumindest teilweise erstreckende Ringspalt sind dabei in Richtung der Längsachse des Linearantriebs orthogonal zum Einlasskanal und zum Auslasskanal platziert.

In einer ersten bevorzugten Ausgestaltung der Erfindung erfolgt die Einströmung des Gases in den Drosselbereich des Gasregel- und Sicherheitsventils über den Ringspalt und die Abströmung des Gases aus dem Drosselbereich des Gasregel- und Sicherheitsventils über die Strömungskammer. Der Ringspalt erstreckt sich in diesem Fall vom Einlasskanal bis in den Drosselbereich und wird mit einströmendem Gas höheren Drucks beaufschlagt. Die Strömungskammer hingegen schließt sich unmittelbar an den Drosselbereich an und mündet in den Auslasskanal und wird mit abströmenden Gas niedrigeren Drucks beaufschlagt. Die beiden unabhängig voneinander elektrisch steuerbaren Schließelemente sind dabei zum Erreichen ihrer Offen- oder Schließstellung in gleicher Richtung axial beweglich ausgebildet. Eine Fertigung des erfindungsgemäßen Gasregel- und Sicherheitsventils erweist sich deshalb als besonders vorteilhaft, da das Gasregel- und Sicherheitsventil von einer Montageseite, nämlich bevorzugt der Antriebsseite, mit beiden Schließelementen bestückt werden kann.

In einer zweiten Ausgestaltung der Erfindung erfolgt die Einströmung des Gases in den Drosselbereich des Gasregel- und Sicherheitsventils über die Strömungskammer und die Abströmung des Gases aus dem Drosselbereich des Gasregel- und Sicherheitsventils über den Ringspalt. Die Strömungskammer erstreckt sich in diesem Fall vom Einlasskanal bis in den Drosselbereich und wird mit einströmenden Gas höheren Drucks beaufschlagt. Der Ringspalt hingegen schließt sich unmittelbar an den Drosselbereich an und mündet in den Auslasskanal und wird mit abströmenden Gas niedrigeren Drucks beaufschlagt. Die beiden unabhängig voneinander elektrisch steuerbaren Schließelemente sind dabei zum Erreichen ihrer Offen- oder Schließstellung in entgegengesetzter Richtung axial beweglich ausgebildet.

In beiden vorgenannten Ausgestaltungen strömt das Gas in dem Ringspalt und in der Strömungskammer in entgegengesetzter Richtung, wobei das Gas im Drosselbereich des Gasregel- und Sicherheitsventils einerseits gezielt gedrosselt und andererseits einer Strömungsrichtungsumlenkung unterzogen wird. Dabei strömt das Gas entweder aus dem Ringspalt über den Drosselbereich in die Strömungskammer oder aber aus der Strömungskammer über den Drosselbereich in den Ringspalt.

Der zur Drosselung des Volumenstroms und des Drucks des Gases vorgesehene Drosselbereich entspricht im Wesentlichen dem Arbeitsbereich des Drosselkörpers beim ersten Schließelement und des Verschlusskörper beim zweiten Schließelement. Dem Verschlusskörper und dem Drosselkörper sind in Längserstreckung der Antriebsachse jeweils passfähig zueinander beabstandete Ventilsitze zugeordnet, auf denen sie aufliegen und die im Drosselbereich des Gasregel- und Sicherheitsventils ringförmig ausgebildet sind.

Die Gemeinsamkeit der beiden unabhängig voneinander arbeitenden Schließelemente besteht darin, dass beide Schließelemente mit der Kraft jeweils eines zugehörigen vorgespannten Federelements beaufschlagbar ausgebildet sind und somit über eine Schnellschließfunktion verfügen.

Der signifikante Unterschied in der Funktion beider Schließelemente besteht darin, dass das erste Schließelement zusätzlich eine Regel- und Modulationsfunktion zur Anpassung des Gasstroms an eine veränderliche Wärmelast übernimmt. Somit verfügt das erfindungsgemäße Gasregel- und Sicherheitsventil über drei Funktionen, nämlich über zwei Schnellschließfunktionen und eine Regel- und Modulationsfunktion.

Die beiden Schließelemente nutzen zur Sicherstellung ihrer Funktion zusätzlich zwei unterschiedliche Antriebssysteme. Während das eine Schnellschließfunktion und eine Regel- und Modulationsfunktion aufweisende erste Schließelement einen Linearantrieb mit einem elektromotorisch angetriebenen Spindel-Mutter-System nutzt, ist das ausschließlich eine Schnellschließfunktion aufweisende zweite Schließelement mit einem Magnetantrieb ausgerüstet.

Die Erregerwicklung des Magnetantriebs des zweiten Schließelements, das erste Federelement und die Motorwicklungen des Linearantriebs des ersten Schließelements sind vorzugsweise in Richtung der Längsachse des Gasregelund Sicherheitsventils oder des Linearantriebs hintereinander platziert.

Durch die voneinander unabhängige Funktionsweise, durch den unterschiedlichen Aufbau sowie durch die unterschiedlichen Antriebe der beiden Schließelemente wird eine vollständige Blockade des erfindungsgemäßen Gasregel- und Sicherheitsventils im Havarie- oder Fehlerfall zuverlässig ausgeschlossen.

Der Drosselkörper des ersten Schließelements weist funktionsbedingt eine gleichprozentige Ventilkennlinie zur Modulation des zur Versorgung des Brenners der Gasheizeinrichtung benötigten Gasstroms auf. Der Vorteil dieser gleichprozentigen Kennlinie besteht darin, dass variable Versorgungsdrücke besser stabilisiert werden können und damit die Gefahr eines schwingenden Regelkreises unterbunden wird. Der Drosselkörper gleitet in der Strömungskammer stufenlos zwischen einer Offenstellung und einer Schließstellung. Die axiale Bewegungsrichtung des Drosselkörpers verläuft dabei orthogonal zur Strömungsrichtung des in den Einlasskanal einströmenden Gases und des aus dem Auslasskanal ausströmenden Gases.

Der Verschlusskörper des zweiten Schließelements weist in einer ersten Ausführungsvariante ein ringförmiges Dichtelement mit einer gekrümmten oder ebenen, zum komplementären Ventilsitz des Verschlusskörpers weisenden Dichtfläche auf. Die Dichtfläche verschließt im Schließzustand den die Strömungskammer zumindest teilweise umschließenden Ringspalt somit flächig gasdicht.

In einer zweiten Ausführungsvariante weist der Verschlusskörper des zweiten Schließelements ein ringförmiges und im Querschnitt V-förmiges Dichtelement mit in Richtung des Ventilsitzes des Verschlusskörpers geöffneten elastischen V-Schenkeln auf. Bei Kraftbeaufschlagung durch das Federelement können die V-Schenkel des Dichtelements somit verformt werden. Die verformbaren V-Schenkel verschließen entlang ihrer Auflage bzw. ihrer Stirnseiten den die Strömungskammer zumindest teilweise umschließenden Ringspalt linienförmig gasdicht. Die konstruktive Bemessung und die Materialauswahl der V-Schenkel erfolgt bevorzugt in Abhängigkeit der Federkraft des für den Verschluss des zweiten Schließelements vorgesehenen Federelements. Der Verformungsgrad der V-Schenkel und damit die Dichtwirkung ist dabei bei einer vorgegebenen Elastizität umso größer, je höher die Federkraft des Federelements ist.

Ein wesentlicher Vorteil eines V-förmigen Dichtelements gegenüber einem aus einem weichen Elastomer bestehenden kompakten Dichtelement mit einer gekrümmten oder ebenen, zum komplementären Ventilsitz des Verschlusskörpers weisenden flachen Dichtfläche besteht vor allem darin, dass schon mit einer relativ geringen Federkraft ein besserer Dichtsitz des Verschlusskörpers auf seinem zugehörigen Ventilsitz erzielt wird. Darüber hinaus können mit einem V-förmigen Dichtelement etwaig auftretende fertigungsbedingte Zentrierprobleme kompensiert werden.

Der Verschlusskörper des zweiten Schließelements sowie der Drosselkörper des ersten Schließelements übernehmen dann die Funktion einer Sicherheitsabsperrvorrichtung, wenn das Gasregel- und Sicherheitsventil stromlos geschaltet ist. Bei einem unerwarteten Stromausfall oder einer gezielten Stromabschaltung wird einerseits der Ringspalt, in Abhängigkeit der Ausbildung des Gasregel- und Sicherheitsventil, vom mit Federkraft beaufschlagten Verschlusskörper des zweiten Schließelements oder vom mit Federkraft beaufschlagten Drosselkörper des ersten Schließelements gasdicht verschlossen. Anderseits wird das zum Antrieb weisende Ende der Strömungskammer, in Abhängigkeit der Ausbildung des Gasregel- und Sicherheitsventils, vom mit Federkraft beaufschlagten Verschlusskörper des zweiten Schließelements oder vom mit Federkraft beaufschlagten Drosselkörper des ersten Schließelements gasdicht verschlossen.

Im Brennerbetrieb wird durch Strombeaufschlagung der zum Hohlanker gehörenden Erregerwicklungen des zweiten Schließelements sowie durch die zum Motor gehörenden Antriebswicklungen des ersten Schließelements entgegen der Federkraftwirkung der zugehörigen Federelemente der Ringspalt und die Strömungskammer in ihrem Querschnitt freigegeben.

Während bei der Strombeaufschlagung der für den Antrieb des ersten Schließelements genutzten Antriebswicklungen des Motors sowie der für den Antrieb des zweiten Schließelements genutzten Erregerwicklungen des Hohlankers beide Federelemente angezogen bzw. komprimiert ausgebildet sind, entspannen sich diese bei Stromunterbrechung, was zu einem schlagartigen Verschluss des Gasregel- und Sicherheitsventil in seinem Drosselbereich führt.

Im stromlosen Zustand des Gasregel- und Sicherheitsventils sitzen der Verschlusskörper mit seinem Dichtelement auf dem am Ende einer Strömungskammer platzierten Ventilsitz und der Drosselkörper auf einem von diesem Ventilsitz in Richtung der Längserstreckung der Antriebsachse beabstandeten Ventilsitz der Strömungskammer auf. Der Abstand der beiden Ventilsitze zueinander kann dabei variabel ausgebildet sein.

Zur Realisierung eines schnellen Verschließens des Drosselbereichs des Gasregel- und Sicherheitsventil im Havariefall sind kurze Stellzeiten der Schließelemente notwendig. Diesem Erfordernis wird dadurch Rechnung getragen, indem die Stellwege der Schließelemente besonders gering bemessen sind. Für den Anker mit dem angeschlossenen Verschlusskörper des zweiten Schließelements ist ein bevorzugter Stellweg bis zu 2mm und für die Antriebsachse mit angeschlossenem Drosselkörper des ersten Schließelements bis zu 8mm ausreichend bemessen.

Eine weitere bevorzugte Ausgestaltung der Erfindung besteht darin, dass das Gasregel- und Sicherheitsventil mindestens zwei in einem Gehäuse zwischen einem Einlasskanal und einem Auslasskanal orthogonal zueinander positionierte Schließelemente aufweist. Ein erstes Schließelement umfasst eine Antriebsachse, einen am unteren Ende der Antriebsachse angeordneten Drosselkörper sowie ein auf das erste Schließelement wirkendes erstes vorgespanntes Federelement, das im oberen Bereich der Antriebsachse angeordnet ist. Das zweite, einen Verschlusskörper aufweisende Schließelement ist dabei mittels Koppelelementen mit einem Hohlanker verbunden. Der Hohlanker ist in einem zylinderartigen, von der Erregerwicklung des Hohlankers umgebenden Hohlraum beweglich und gegen die Kraft eines zweiten vorgespannten Federelements arbeitend angeordnet.

Zwei zueinander orthogonal positionierte Koppelelemente sind hierbei vorgesehen, die mittels eines Umlenkelements miteinander verbunden sind. Das erste Koppelelement ist dabei in x-Richtung und das zweite Koppelelement in y-Richtung beweglich ausgebildet.

Das Umlenkelement weist zur Sicherstellung seiner Drehbewegung eine Schwenkachse und zwei orthogonal zueinander angeordnete Schenkel auf, in die die Koppelelemente vorzugsweise formschlüssig eingreifen.

In Strömungsrichtung des Gases schließt sich an den Einlasskanal eine Strömungskammer an, wobei der Verschlusskörper zwischen einer Offenstellung und einer Schließstellung in der Strömungskammer axial beweglich ausgebildet ist.

Beide Ausführungsvarianten des erfindungsgemäßen Gasregel- und Sicherheitsventils, nämlich die koaxiale Anordnung sowie die orthogonale Anordnung der beiden Schließelemente, haben gemeinsam, dass die beiden Schließelemente in Richtung der Niederdruckseite des Gasregel- und Sicherheitsventils im stromlosen Zustand schlagartig aber dennoch zeitversetzt schließen, um die unverbrannten Gasmengen gefahrlos abzuführen.

Die signifikanten Vorteile und Merkmale der Erfindung gegenüber dem Stand der Technik sind im Wesentlichen:
- vollständige mechanische Entkopplung der beiden auf engstem Bauraum angeordneten Schließelemente,
- orthogonal oder koaxial zueinander positionierte Schließelemente sichern ein breites Anwendungsfeld auch bei kleinen Montageräumen ab,
- der als Spindel-Mutter-System ausgebildete Linearantrieb des ersten Schließelements und der Magnetantrieb des zweiten Schließelements sichern die voneinander unabhängige Funktionsweise beider Schließelemente,
- das erste Schließelement übernimmt eine Schnellschließ- sowie eine Regel- und Modulationsfunktion und das zweite Schließelement übernimmt eine Schnellschließfunktion,
- strömungsgünstige Anordnung und Stellrichtung der Schließelemente in Strömungsrichtung des Gases und damit geringer Druckabfall über dem Gasregel- und Sicherheitsventil,
- zeitversetztes Schließen der Schließelemente in Richtung der Niederdruckseite des Gasregel- und Sicherheitsventils im stromlosen Zustand und damit gefahrlose Abführung der unverbrannten Gasmengen sowie
- ausgezeichneter Dichtsitz des Drosselkörpers auf seinem zugehörigen Ventilsitz unter Verwendung eines V-förmigen Dichtelements, dessen V-Schenkel sich bei Federkraftbeaufschlagung voneinander unabhängig verformen können.

Weitere Merkmale und Vorteile der Erfindung erschließen sich dem Fachmann aus der folgenden detaillierten Beschreibung von drei bevorzugten Ausführungsformen im Hinblick auf die anliegenden Zeichnungen; in diesen zeigen:
- Fig.1: Querschnitt einer ersten bevorzugten Ausgestaltung des Gasregel- und Sicherheitsventils mit koaxial zueinander positionierten Schließelementen in der Schließstellung, einem auslassseitigen Ringspalt und einem Verschlusskörper mit ebenem Dichtelement,
- Fig. 2: Querschnitt einer ersten bevorzugten Ausgestaltung des Gasregel- und Sicherheitsventils mit koaxial zueinander positionierten Schließelementen in der Offenstellung, einem auslassseitigen Ringspalt und einem Verschlusskörper mit ebenem Dichtelement,
- Fig. 3: Querschnitt einer zweiten bevorzugten Ausgestaltung des Gasregel- und Sicherheitsventils mit koaxial zueinander positionierten Schließelementen in der Schließstellung, einem einlassseitigen Ringspalt und einem Verschlusskörper mit V-förmigem Dichtelement,
- Fig. 4: Querschnitt einer zweiten bevorzugten Ausgestaltung des Gasregel- und Sicherheitsventils mit koaxial zueinander positionierten Schließelementen in der Schließstellung, einem auslassseitigen Ringspalt und einem Verschlusskörper mit V-förmigem Dichtelement,
- Fig. 5: Querschnitt einer dritten bevorzugten Ausgestaltung des Gasregel- und Sicherheitsventils mit orthogonal zueinander positionierten Schließelementen in der Schließstellung des Verschlusskörpers sowie
- Fig. 6: Querschnitt einer dritten bevorzugten Ausgestaltung des Gasregel- und Sicherheitsventils mit orthogonal zueinander positionierten Schließelementen in der Offenstellung des Verschlusskörpers.

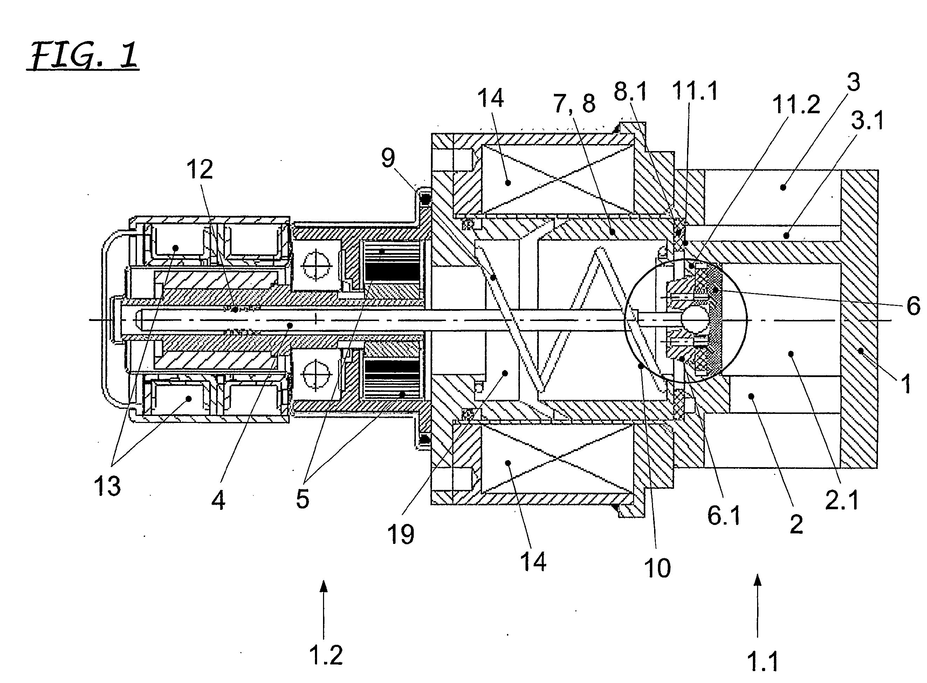

Die Figuren 1 bis 2 illustrieren einen Querschnitt einer ersten bevorzugten Ausgestaltung des Gasregel- und Sicherheitsventils in der Offen- und Schließstellung mit koaxial zueinander positionierten Schließelementen, einer einlassseitigen Strömungskammer 2.1, einem auslassseitigen Ringspalt 3.1 und einem Verschlusskörper 8 mit ebenem Dichtelement 8.1. Das erfindungsgemäße Gasregel- und Sicherheitsventil weist einen Einlasskanal 2 sowie einen in axialer Verlängerung der Hauptachse des Einlasskanals 2 gegenüberliegend platzierten Auslasskanal 3 auf. Zwischen dem Einlasskanal 2 und dem Auslasskanal 3 sind die Strömungskammer 2.1 sowie der sich konzentrisch um die Strömungskammer 2.1 zumindest teilweise erstreckender Ringspalt 3.1 vorgesehen, die im Drosselbereich 10 zusammentreffen. Die Strömungskammer 2.1 schließt sich unmittelbar an den Einlasskanal 2 an und mündet im Drosselbereich 10. Ausgehend vom Drosselbereich 10 erstreckt sich der konzentrisch um die Strömungskammer 2.1 angeordnete Ringspalt 3.1 bis zum Auslasskanal 3 und mündet in diesen. Der Strömungspfad des Gases von der Hochdruckseite bis zur Niederdruckseite lässt sich demnach wie folgt beschreiben: Einlasskanal 2, Strömungskammer 2.1, Drosselbereich 10, Ringspalt 3.1 und Auslasskanal 3.
Die unabhängig voneinander wirkenden beiden Schließeelemente des Gasregel- und Sicherheitsventils sind koaxial zueinander positioniert und axial zueinander beabstandet. Das erste, äußere Schließelement weist eine als Spindel eines Linearantriebs 12 ausgebildete Antriebsachse 4 auf, an deren Ventilseite 1.1 des Gasregel- und Sicherheitsventils der zur Modulation des Gasstroms dienende Drosselkörper 6 platziert ist, dessen Arbeitsbereich dem Drosselbereich 10 des Gasregel- und Sicherheitsventils entspricht. Im Bereich der sich an die Ventilseite 1.1 anschließenden Antriebsseite 1.2 der Antriebsachse 4 ist oberhalb des Magnetantriebes für das zweite Schließelement ein erstes Federelement 5 angeordnet, welches die Antriebsachse 4 im stromlosen Zustand des Gasregel- und Sicherheitsventils in Richtung der Ventilseite 1.1 drückt und damit den ein Dichtelement 6.1 aufweisenden Drosselkörper 6 auf seinen zugehörigen Ventilsitz 11.2 presst. An der Antriebsseite 1.2 der Antriebsachse 4 sind die Antriebswicklungen 13 des Motors platziert. Auf der Antriebsachse 4 rotiert eine nicht näher beschriebene Mutter des aus dem Stand der Technik vorbekannten Linearantriebs 12 bzw. des Spindel-Mutter-Antriebs, welche von den Antriebswicklungen 13 des Motors angetrieben wird. Der Ventilsitz 11.2 des Drosselkörpers 6 ist an dem zur Antriebsseite 1.2 des Gasregel- und Sicherheitsventils weisenden Ende der Strömungskammer 2.1 im Drosselbereich 10 angeordnet. Der die Strömungskammer 2.1 verschließende Drosselkörpers 6 kann eine beliebige Form aufweisen, ist bevorzugt jedoch konisch ausgebildet. Das zwischen dem Drosselkörper 6 und dem zugehörigen ersten Federelement 5 angeordnete zweite Schließelement besteht aus einem Hohlanker 7, an dessen zur Ventilseite 1.1 des Gasregel- und Sicherheitsventils weisenden Ende ein Verschlusskörper 8 platziert ist. Der Hohlanker 7 ist in einem zylinderartigen Hohlraum 19 axial beweglich angeordnet. Dieser Hohlraum 19 ist von der als Teil eines Magnetantriebs ausgebildeten Erregerwicklung 14 umgeben und wird durch diese angetrieben. Der Hohlanker 7 ist mit einem koaxial angeordneten zweiten Federelement 9 gekoppelt, dass sich zwischen Hohlanker und Gehäusewandung abstützend im Inneren des Hohlankers befindet und im spannungslosen Zustand des Gasregel- und Sicherheitsventils den mit dem Hohlanker 7 verbundenen Verschlusskörper 8 auf seinen zugehörigen und im Drosselbereich 10 platzierten Ventilssitz 11.1 presst. Der Verschlusskörper weist ein ringförmiges Dichtelement 8.1 mit einer ebenen, zum Ventilsitz 11.1 des Verschlusskörpers 8 weisenden Dichtfläche auf, wobei das Dichtelement 8.1 das im Schließzustand den die Strömungskammer 2.1 konzentrisch umgebenden und mit dem Auslasskanal 3 verbundenen Ringspalt 3.1 gasdicht verschließt. Der Ventilsitz 11.1 des Verschlusskörpers 8 ist vom Ventilssitz 11.2 des Drosselkörpers 6 in Richtung der Längserstreckung der Antriebsachse 4 beabstandet angeordnet. Die Antriebsachse 4 des ersten Schließelements durchdringt im Drosselbereich 10 des Gasregel- und Sicherheitsventils den Verschlusskörper 8 des zweiten Schließelements derart kontaktlos, dass beide Schließelemente mechanisch voneinander entkoppelt bewegt werden können. Für den Fall, dass eines der beiden Schließelemente versagt, ist die äußere Gasdichtheit des Gasregel- und Sicherheitsventils durch das noch funktionsfähige zweite Schließelement gewährleistet. Die beiden unabhängig voneinander elektrisch steuerbaren Schließelemente sind zum Erreichen ihrer Offen- und Schließstellung in entgegengesetzter Richtung axial beweglich ausgebildet.

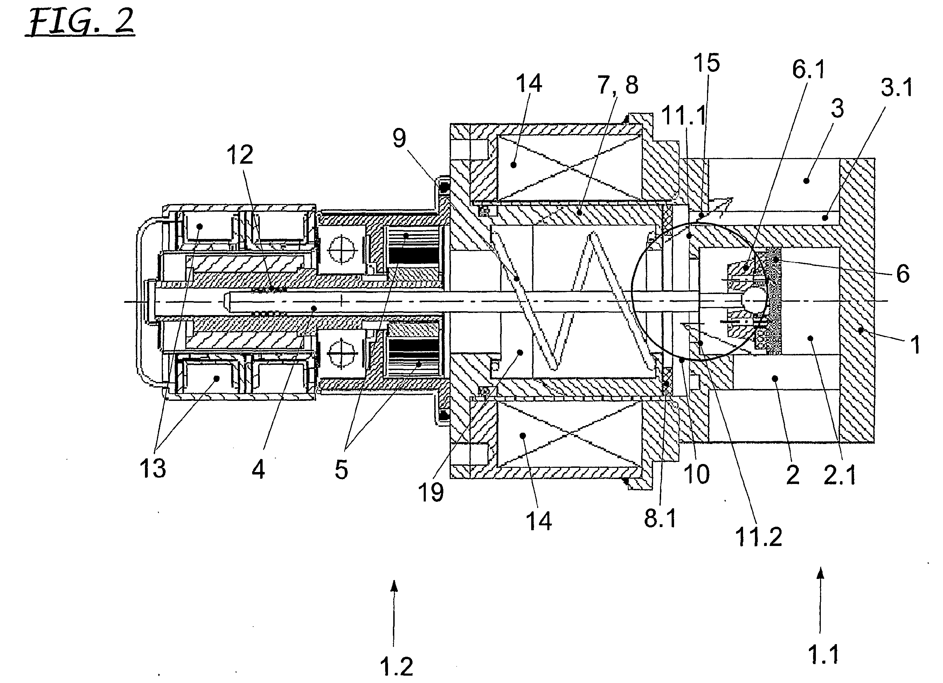

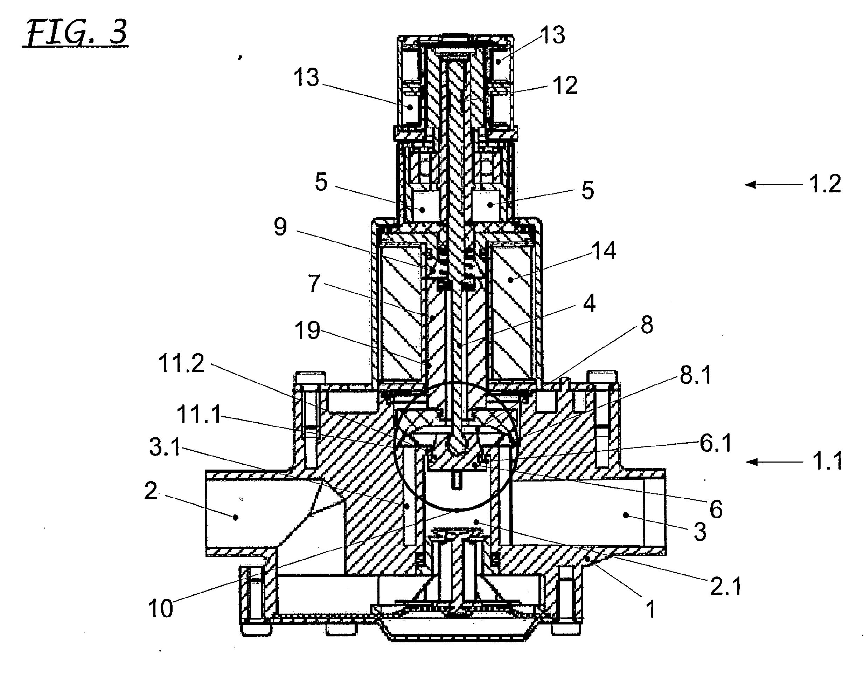

Die Fig. 3 illustriert einen Querschnitt einer ersten bevorzugten Ausgestaltung des Gasregel- und Sicherheitsventils mit koaxial zueinander positionierten Schließelementen, einer einlassseitigen Strömungskammer 2.1, einem auslassseitigen Ringspalt 3.1 und einem Verschlusskörper 8 mit V-förmigen Dichtelement. Die Strömungskammer 2.1 schließt sich unmittelbar an den Einlasskanal 2 an und mündet im Drosselbereich 10. Ausgehend vom Drosselbereich 10 erstreckt sich der konzentrisch um die Strömungskammer 2.1 angeordnete Ringspalt 3.1 bis zum Auslasskanal 3 und mündet in diesen. Der Aufbau des Gasregel- und Sicherheitsventils entspricht dem der Figuren 1 und 2, wobei der Strömungspfad des Gases sich von der Hochdruckseite bis zur Niederdruckseite demnach wie folgt beschreiben lässt: Einlasskanal 2, Strömungskammer 2.1, Drosselbereich 10, Ringspalt 3.1 und Auslasskanal 3. Der wesentliche Unterschied gegenüber der in den Figuren 1 und 2 dargestellten Ausgestaltung der Erfindung besteht allerdings darin, dass der Verschlusskörper 8 des zweiten Schließelements kein flachdichtendes ringförmiges Dichtelement 8.1, sondern vielmehr ein ringförmiges und im Querschnitt V-förmiges Dichtelement 8.1 mit linienförmiger Dichtkante aufweist. Das im Querschnitt V-förmige Dichtelement 8.1 weist in Richtung des Ventilsitzes 11.1 des Verschlusskörpers 8 zwei geöffnete V-Schenkel auf, wobei die bei Kraftbeaufschlagung durch das zugehörige Federelement 9 elastisch verformbaren V-Schenkel den die Strömungskammer 2.1 zumindest teilweise umschließenden Ringspalt 3.1 linienförmig entlang der Auflage der V-Schenkel gasdicht verschließen. Beide, das Dichtelement bildende V-Schenkel sind symmetrisch zur durch das Dicht- bzw. Schließelement verlaufenden Achse angeordnet und kontaktieren sich - im Querschnitt betrachtet - naturgemäß nur an einem Punkt an der Unterseite des Verschlusskörpers 8. Dadurch, dass sich beide V-Schenkel unabhängig voneinander elastisch verformen können, lassen sich fertigungsbedingte Toleranzen des Ventilsitzes 11.1 bestmöglich ausgleichen und kompensieren, was zu einem ausgezeichneten Dichtsitz führt. Die beiden unabhängig voneinander elektrisch steuerbaren Schließelemente sind zum Erreichen ihrer Offen- und Schließstellung in entgegengesetzter Richtung axial beweglich ausgebildet.

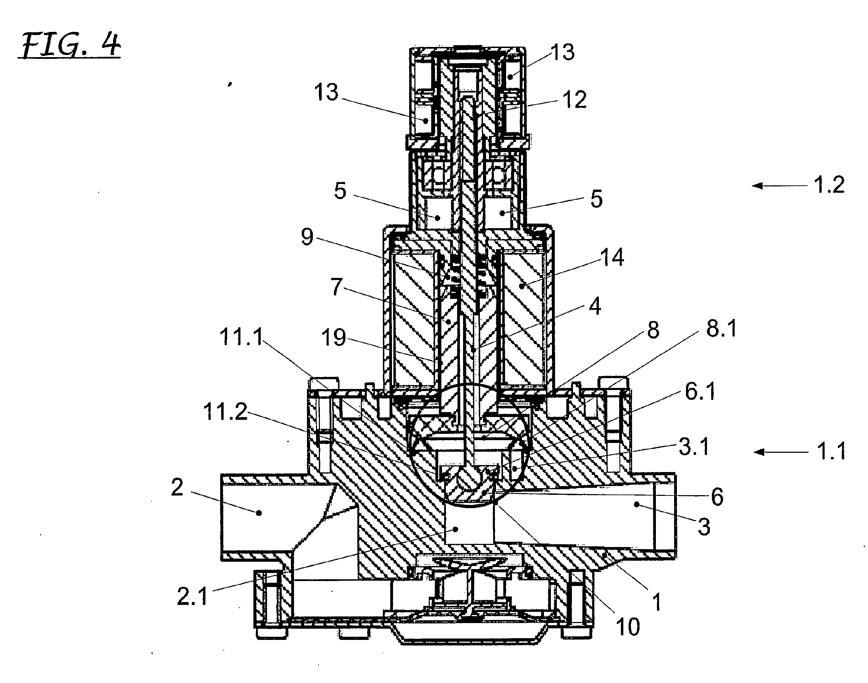

Die Fig. 4 illustriert einen Querschnitt einer zweiten bevorzugten Ausgestaltung des Gasregel- und Sicherheitsventils mit koaxial zueinander positionierten Schließelementen, einem einlassseitigen Ringsspalt 3.1, einer auslassseitigen Strömungskammer 2.1 und einem Verschlusskörper 8 mit V-förmigen Dichtelement 8.1. Der grundsätzliche Aufbau des Gasregel- und Sicherheitsventils entspricht dem der Figuren 1 bis 2, wobei als Dichtelement 8.1 für den Verschlusskörper 8, ebenso wie in der Fig. 3, ein im Querschnitt V-förmiges Dichtelement 8.1 verwendet wird. Der wesentliche Unterschied gegenüber den in den Figuren 1 bis 3 dargestellten Ausgestaltungen der Erfindung besteht darin, dass der die Strömungskammer 2.1 zumindest teilweise umschließende und mit dem Einlasskanal 2 verbundene Ringspalt 3.1 zur Einströmung des Gases in den Drosselbereich 10 und die mit dem Auslasskanal 3 verbundene Strömungskammer 2.1 zur Ausströmung des Gases aus dem Drosselbereich 10 verwendet wird. Die Strömungskammer 2.1 schließt sich dabei unmittelbar an den Einlasskanal 2 an und mündet im Drosselbereich 10. Ausgehend vom Drosselbereich 10 erstreckt sich der konzentrisch um die Strömungskammer 2.1 angeordnete Ringspalt 3.1 bis zum Auslasskanal 3 und mündet in diesen. Der Strömungspfad des Gases von der Hochdruckseite bis zur Niederdruckseite lässt sich demnach wie folgt beschreiben: Einlasskanal 2, Ringspalt 3.1, Drosselbereich 10, Strömungskammer 2.1 und Auslasskanal 3. Die beiden unabhängig voneinander elektrisch steuerbaren Schließelemente sind zum Erreichen ihrer Offen- und Schließstellung in gleicher Richtung axial beweglich ausgebildet.

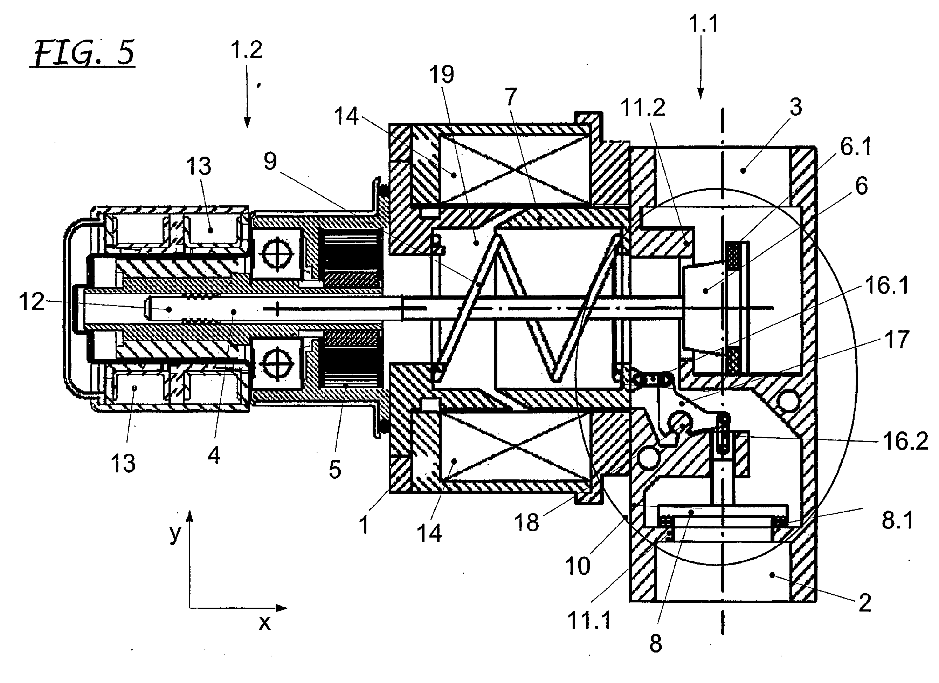

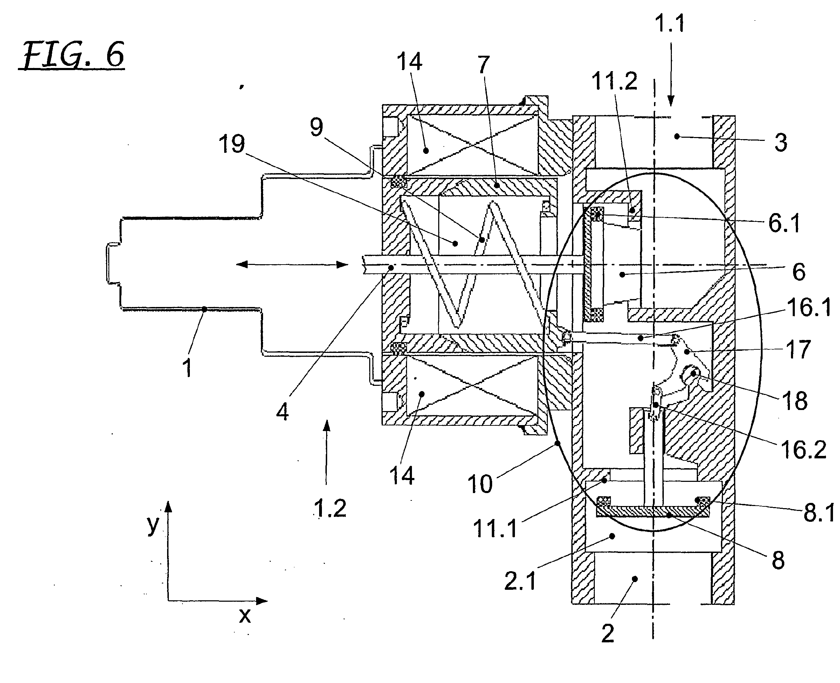

Die Fig. 5 und die Fig. 6 illustrieren einen Querschnitt einer dritten bevorzugten Ausgestaltung des Gasregel- und Sicherheitsventils mit orthogonal zueinander positionierten Schließelementen. Der grundsätzliche Aufbau entspricht dabei im Wesentlichen dem der Figuren 1 bis 4. Der wesentliche Unterschied gegenüber der in den Fig. 1 und Fig. 4 dargestellten Ausgestaltung der Erfindung besteht allerdings darin, dass das zweite Schließelement mit seinem Verschlusskörper 8, 8.1 mittels zwei Koppelelementen 16 mittelbar mit dem Hohlanker 7 verbunden ist. Die Bewegungsrichtung der beiden orthogonal zueinander positionierten Koppelelemente 16.1, 16.2 entspricht dabei der Bewegungsrichtung des Hohlankers 7 bzw. des Verschlusskörpers 8. Das in x-Richtung bewegliche Koppelelement 16.1 ist dabei mit dem Hohlanker 7 und das in γ-Richtung bewegliche Koppelelement 16.2 mit dem Verschlusskörper 8 verbunden. Beide Koppelelemente 16.1, 16.2 sind zum Zwecke der Umlenkung der mechanischen Kraftwirkung mit einem schwenk- bzw. drehbaren Umlenkelement 17 mit orthogonal zueinander ausgerichteten Schenkeln verbunden. Das Umlenkelement 17 weist eine Schwenkachse 18 auf, die ein Verschwenken des Umlenkelements in x-Richtung bzw. y-Richtung sicherstellt. Die hier dargestellte formschlüssige Verbindung zwischen den Schenkeln des Umlenkelements 17 und den beiden Koppelelementen 16.1, 16.2 ist als Bolzen-Gabel-Verbindung ausgebildet. Der Drosselbereich 10 dieser Ventilausgestaltung ist gegenüber der in der Fig. 1 und Fig. 4 dargestellten Ventilausgestaltungen größer dimensioniert, wobei der Fertigungsaufwand durch das von dem Hohlanker 7 örtlich getrennt angeordnete Verschlusselement 8 erheblich reduziert werden konnte.

### LISTE DER BEZUGSZEICHEN

- 1: Gehäuse des Gasregel- und Sicherheitsventils
- 1.1: Ventilseite
- 1.2: Antriebsseite
- 2: Einlasskanal
- 2.1: Strömungskammer
- 3: Auslasskanal
- 3.1: Ringspalt
- 4: Antriebsachse
- 5: erstes Federelement
- 6: Drosselkörper
- 6.1: Dichtelement des Drosselkörpers 6
- 7: Anker / Hohlanker
- 8: Verschlusskörper
- 8.1: Dichtelement des Verschlusskörpers 8
- 9: zweites Federelement
- 10: Drosselbereich
- 11: Ventilsitze
- 11.1: Ventilsitz des Verschlusskörpers 8
- 11.2: Ventilsitz des Drosselkörpers 6
- 12: Linearantrieb
- 13: Wicklungen des Motors
- 14: Erregerwicklung des Hohlankers 7
- 15: Strömungsrichtung des Gases
- 16: Koppelelement
- 16.1: erstes Koppelelement
- 16.2: zweites Koppelelement
- 17: Umlenkelement
- 18: Schwenkachse
- 19: Hohlraum

## Patentansprüche

1. Gasregel- und Sicherheitsventil für Brenner einer modulierbaren Gasheizeinrichtung, mindestens aufweisend zwei in einem Gehäuse (1) zwischen einem Einlasskanal (2) und einem Auslasskanal (3) koaxial zueinander positionierte und axial zueinander beabstandete Schließelemente, die unabhängig voneinander jeweils mittels eines zugehörigen Federelements (5, 9) im stromlosen Zustand Schlagartig das Gasregel- und Sicherheitsventil verschließen, wobei das erste, äußere, zusätzlich zur Modulation des Gasstromes dienende Schließelement eine als Spindel eines Linearantriebs (12) ausgebildete Antriebsachse (4) aufweist, an deren der Ventilseite (1.1) des Gasregel- und Sicherheitsventils zugewandten Ende ein Drosselkörper (6) und auf der Antriebsseite (1.2) des Gasregel- und Sicherheitsventils das erste Federelement (5) platziert sind, und dass das zwischen dem ersten Federelement (5) und dem Drosselkörper (6, 6.1) angeordnete zweite, innere Schließelement einen mit einem Hohlanker (7) verbundenen, zur Ventilseite (1.1) des Gasregel- und Sicherheitsventils weisenden Verschlusskörper (8, 8.1) aufweist, **dadurch gekennzeichnet, dass** der das zweite Federelement (9) aufnehmende Hohlanker (7) in einem zylinderartigen Hohlraum (19) beweglich angeordnet ist, und dieser Hohlraum (19) von einer als Teil eines Magnetantriebs ausgebildeten Erregerwicklung (14) des Hohlankers (7) umgeben ist.

2. Gasregel- und Sicherheitsventil nach Anspruch 1, **dadurch gekennzeichnet, dass** zwischen dem Einlasskanal (2) und dem Auslasskanal (3) eine Strömungskammer (2.1) sowie ein sich konzentrisch um die Strömungskammer (2.1) zumindest teilweise erstreckender Ringspalt (3.1) vorgesehen sind, und der Ringspalt (3.1) und die Strömungskammer (2.1) wechselseitig für die Einströmung und die Ausströmung des Gases genutzt werden, wobei
a. bei der Einströmung des Gases über den Ringspalt (3.1) sich dieser vom Einlasskanal (2) bis in den Drosselbereich (6) und die Strömungskammer (2.1) sich vom Drosselbereich (6) bis zum Auslasskanal (3) erstreckt, und die beiden unabhängig voneinander elektrisch steuerbaren Schließelemente zum Erreichen ihrer Offen- oder Schließstellung in gleicher Richtung axial beweglich ausgebildet sind,
oder
b. bei der Einströmung des Gases über die Strömungskammer (2.1) sich diese vom Einlasskanal (2) bis in den Drosselbereich (6) und der Ringspalt (3.1) sich vom Drosselbereich (6) bis zum Auslasskanal (3) erstreckt, und die beiden unabhängig voneinander elektrisch steuerbaren Schließelemente zum Erreichen ihrer Offen- oder Schließstellung in entgegengesetzter Richtung axial beweglich ausgebildet sind.

3. **Gasregel-** und Sicherheitsventil nach Anspruch 2, **dadurch gekennzeichnet, dass** die Strömungskammer (2.1) sowie der sich konzentrisch um die Strömungskammer (2.1) zumindest teilweise erstreckende Ringspalt (3.1) in Richtung der Längsachse des Linearantriebs (12) orthogonal zum Einlasskanal (2) und zum Auslasskanal (3) platziert sind.

4. Gasregel- und Sicherheitsventil nach einem der Ansprüche 2 oder 3, **dadurch gekennzeichnet, dass** im stromlosen Zustand des Gasregelund Sicherheitsventils der Verschlusskörper (8) mittels seines Dichtelements (8.1) auf einem zum Antrieb des Gasregel- und Sicherheitsventils weisenden Ende der Strömungskammer (2.1) angeordneten Ventilsitz (11.1) und der Drosselkörper (6) auf einem von diesem Ventilsitz in Richtung der Längserstreckung der Antriebsachse (4) beabstandeten Ventilsitz (11.2) der Strömungskammer (2.1) angeordnet sind.

5. Gasregel- und Sicherheitsventil für Brenner einer modulierbaren Gasheizeinrichtung, mindestens aufweisend zwei in einem Gehäuse (1) zwischen einem Einlasskanal (2) und einem Auslasskanal (3) positionierte Schließelemente,
wobei das erste - mittels Linearantrieb angetriebene - Schließelement eine Antriebsachse (4), einen am unteren Ende der Antriebsachse (4) angeordneten Drosselkörper (6, 6.1) sowie ein auf das erste Schließelement wirkendes erstes vorgespanntes Federelement (5) aufweist, das im oberen Bereich der Antriebsachse (4) angeordnet ist, **dadurch gekennzeichnet, dass** beide Schließelemente orthogonal zueinander positioniert sind und dass das zweite - durch Magnetantrieb angetriebene -, einen Verschlusskörper (8, 8.1) aufweisende Schließelement mittels zweier orthogonal zueinander positionierter und durch ein Umlenkelement miteinander verbundener Koppelelemente (16) mit einem Hohlanker (7) verbunden ist, der in einem zylinderartigen, von der Erregerwicklung des Hohlankers (7) umgebenden Hohlraum (19) beweglich und gegen die Kraft eines zweiten vorgespannten Federelements (9) arbeitend angeordnet ist.

6. Gasregel- und Sicherheitsventil nach Anspruch 5,
**dadurch gekennzeichnet, dass** das Umlenkelement (17) eine
Schwenkachse (18) und zwei orthogonal zueinander angeordnete Schenkel aufweist, in die die Koppelelemente (16) formschlüssig eingreifen.

7. Gasregel- und Sicherheitsventil nach einem der Ansprüche 5 oder 6, **dadurch gekennzeichnet, dass** eine Strömungskammer (2.1) vorgesehen ist, die sich in Strömungsrichtung des Gases an den Einlasskanal (2) anschließt, wobei der Verschlusskörper (8) zwischen einer Offenstellung und einer Schließstellung in der Strömungskammer (2.1) axial beweglich ausgebildet ist.

8. Gasregel- und Sicherheitsventil nach einem der Ansprüche 2,4 oder 7, **dadurch gekennzeichnet, dass** der Verschlusskörper (8) ein ringförmiges Dichtelement mit einer gekrümmten oder ebenen, zum komplementären Ventilsitz des Verschlusskörpers (8) weisenden Dichtfläche aufweist, wobei das Dichtelement das im Schließzustand den die Strömungskammer (2.1) zumindest teilweise umschließenden Ringspalt (3.1) flächig gasdicht verschließt.

9. Gasregel- und Sicherheitsventil nach einem der Ansprüche 2, 4 order 7, **dadurch gekennzeichnet, dass** der Verschlusskörper (8) ein ringförmiges und im Querschnitt V-förmiges Dichtelement (8.1) mit in Richtung des Ventilsitzes (11.1) des Verschlusskörpers (8) geöffneten V-Schenkeln aufweist, wobei die bei Kraftbeaufschlagung durch das Federelement (9) verformbaren elastischen V-Schenkel den die Strömungskammer (2.1) zumindest teilweise umschließenden Ringspalt (3.1) linienförmig entlang der Auflage der V-Schenkel gasdicht verschließen.

## Claims

1. Gas control and safety valve for burners of a modulatable gas heating apparatus, at least comprising two closing devices which in a casing (1) between an inlet channel (2) and an outlet channel (3), are positioned coaxial to each other, axially distanced to each other, the closing devices in de-energized conditions, independently of each other, each instantaneously closing the gas control and safety valve by means of an accompanying spring element (5, 9), whereby the first external closing device, additionally functioning to modulate the gas flow, is provided with a drive shaft (4) that is established as the stem of a linear drive (12), with a throttling body (6) being placed at the end of the drive shaft (4) directed towards the valve side (1.1) of the gas control and safety valve, and on the drive side of the gas control and safety valve, the first spring element (5) is placed, and whereby the second internal closing device disposed between the first spring element (5) and the throttling body (6, 6.1) is provided with a closing body (8, 8.1), which is connected to a hollow armature (7) directed towards the valve side (1.1) of the gas control and safety valve, **characterized by** that the hollow armature (7), which accomodates the second spring element (9), is movably disposed in a cylinder-like hollow space (19), the hollow space (19) being enclosed by an excitation winding (14) of the hollow armature (7), the field winding (14) established as part of a solenoid-operated drive.

2. Gas control and safety valve to claim 1 **characterized by** that between the inlet channel (2) and the outlet channel (3), a flow chamber (2.1) and an annular gap (3.1) are provided, the annular gap (3.1) at least partially extending concentrically around the flow chamber (2.1), and the annular gap (3.1) and the flow chamber (2.1) are alternately used for the inflow and outflow of the gas, whereby
a) during inflow of the gas over the annular gap (3.1), the annular gap (3.1) extends from the inlet channel (2) up into the throttling region (6) and the flow chamber (2.1) extends from the throttling region (6) up to the outlet channel (3), and both closing elements, which are electrically controllable independently of each other, for reaching their open or closed position, are established axially movable in same direction,
or
b) during inflow of the gas over the flow chamber (2.1), the flow chamber (2.1) extends from the inlet channel (2) up into the throttling region (6) and the annular gap (3.1) extends from the throttling region (6) up to the outlet channel (3), and both closing elements, which are electrically controllable independently of each other, for reaching their open or closed position, are established axially movable in opposite directions.

3. Gas control and safety valve to claim 2 **characterized by** that the flow chamber (2.1) and the annular gap (3.1), which at least partially extends concentrically around the flow chamber (2.1), in direction of the longitudinal axis of the linear drive (12) are disposed orthogonal to the inlet channel (2) and the outlet channel (3).

4. Gas control and safety valve to any of the claims 2 or 3 **characterized by** that in de-energized conditions of the gas control and safety valve, the closing body (8) by means of its sealing member (8.1) is placed on a valve seat (11.1) at an end of the flow chamber (2.1), the valve seat (11.1) being directed towards the drive of the gas control and safety valve, and the throttling body (6) is placed on a valve seat (11.2) of the flow chamber (2.1), the valve seat (11.2) being distanced to the valve seat (11.1) in direction of the longitudinal extension of the drive shaft (4).

5. Gas control and safety valve for burners of a modulatable gas heating apparatus, at least comprising two closing devices which are positioned in a casing (1) between an inlet channel (2) and an outlet channel (3), whereby the first closing device, which is driven by a linear drive, is provided with a drive shaft (4), a throttling body (6, 6.1) arranged at the lower end of the drive shaft (4), and a first pretensioned spring element (5) acting on the first closing device, the spring element (5) arranged in the upper region of the drive shaft (4), **characterized by** that both closing devices are positioned orthogonal to each other and the second closing device, which is driven by a solenoid-operated drive and is provided with a closing body (8, 8.1), is connected to a hollow armature (7) by means of two coupling elements (16) which are positioned orthogonal to each other, connected to each other by a reversing element (17), the hollow armature (7) being arranged movably in a cylinder-like hollow space (19), which is enclosed by the excitation winding of the hollow armature (7), the hollow armature (7) acting against the force of a second pretensioned spring element (9).

6. Gas control and safety valve to claim 5 **characterized by** that the reversing element (17) is provided with a pivoting shaft (18) and two legs arranged orthogonal to each other, with which the coupling elements (16) are engaged in positive manner.

7. Gas control and safety valve to any of the claims 5 or 6 **characterized by** that a flow chamber (2.1) is provided which in direction of the gas flow is disposed downstream of the inlet channel (2), whereby the closing body (8) is established in the flow chamber (2.1) axially movable between an open position and a closed position.

8. Gas control and safety valve to any of the claims 2, 4 or 7 **characterized by** that the closing body (8) is provided with an annular sealing element having a curved or flat sealing surface directed towards the complementary valve seat of the closing body (8), whereby the sealing element established as a surface gas-tightly closes the annular gap (3.1), which at least partially encloses the flow chamber (2.1) in closed condition.

9. Gas control and safety valve to any of the claims 2, 4 or 7 **characterized by** that the closing body (8) is provided with an annular sealing element, which has a V-shaped section with legs open in direction of the valve seat (11.1) of the closing body (8), whereby during application of force by the spring element (9) the deformable elastic V-legs linearly along the support of the V-legs gas-tightly close the annular gap (3.1), which at least partially encloses the flow chamber (2.1).

## Revendications

1. Vanne de réglage du gaz et de sécurité pour brûleurs d'un chauffage au gaz modulable, disposant au minimum de deux éléments de fermeture, adoptant une position coaxiale l'un par rapport à l'autre dans un boîtier (1) entre un conduit d'admission (2) et un conduit d'émission (3), ces éléments de fermeture, hors tension, fermant subitement et l'un indépendamment de l'autre la vanne de réglage du gaz et de sécurité, chacun au moyen d'un élément de ressort (5, 9), le premier élément de fermeture, l'élément extérieur, servant également à moduler le flux du gaz, disposant d'un axe de commande (4) en forme de broche d'une commande linéaire (12), sur le bout faisant face au côté vanne (1.1) de la vanne de réglage du gaz et de sécurité, sur laquelle se trouve un corps d'étranglement (6), et, le premier élément ressort (5) se trouvant sur le côté commande (1.2) de la vanne de réglage du gaz et de sécurité, dont le deuxième élément de fermeture, l'élément intérieur, positionné entre le premier élément ressort (5) et le corps d'étranglement (6, 6.1) dispose d'un corps de fermeture (8, 8.1), lié à un induit creux (7) et orienté vers le côté vanne (1.1) de la vanne de réglage du gaz et de sécurité, **caractérisée en ce que** l'induit creux (7) acceptant le deuxième élément ressort (9) est amovible dans une cavité cylindrique (19) et que cette cavité (19) est entourée par un bobinage d'excitation (14) de l'induit creux (7) formant une partie d'une commande magnétique.

2. Vanne de réglage du gaz et de sécurité selon la revendication 1, **caractérisée en ce que**, entre le conduit d'admission (2) et le conduit d'émission (3), elle est pourvue d'une chambre de flux (2.1) ainsi que d'un passage annulaire (3.1) entourant au moins partiellement et selon une forme concentrique la chambre de flux (2.1) et que le passage annulaire (3.1) et la chambre de flux (2.1) sont utilisés alternativement pour l'admission et l'émission du gaz, où :
a. lors de l'admission du gaz par le passage annulaire (3.1), celui-ci s'étend à partir du conduit d'admission (2) jusqu'à la zone d'étranglement (6) et que la chambre de flux (2.1) s'étend à partir de la zone d'étranglement (6) jusqu'au conduit d'émission (3), et les deux éléments de fermeture commandés de manière électrique l'un indépendamment de l'autre sont axialement amovibles dans le même sens afin d'atteindre leur position d'ouverture ou de fermeture,
ou
b. lors de l'admission du gaz par la chambre de flux (2.1), celle-ci s'étend à partir du conduit d'admission (2) jusqu'à la zone d'étranglement (6) et le passage annulaire (3.1) s'étend à partir de la zone d'étranglement (6) jusqu'au conduit d'émission (3), et les deux éléments de fermeture commandés de manière électrique l'un indépendamment de l'autre sont axialement amovibles dans le sens opposé afin d'atteindre leur position d'ouverture ou de fermeture.

3. Vanne de réglage du gaz et de sécurité selon la revendication 2, **caractérisée en ce que** la chambre de flux (2.1) ainsi que le passage annulaire (3.1) entourant au moins partiellement et selon une forme concentrique la chambre de flux (2.1) dans le sens de l'axe longitudinal de la commande linéaire (12) se trouvent dans une position orthogonale par rapport au conduit d'admission (2) et au conduit d'émission (3).

4. Vanne de réglage du gaz et de sécurité selon une des revendications 2 ou 3, **caractérisée en ce que**, à l'état hors tension de la vanne de réglage du gaz et de sécurité, le corps de fermeture (8) moyennant son élément d'étanchéité (8.1) est positionné sur un siège de vanne (11.1) se trouvant à l'extrémité de la chambre de flux (2.1) orientée vers la commande de la vanne de réglage du gaz et de sécurité et que le corps d'étranglement (6) est disposé sur un siège de vanne (11.2) de la chambre de flux (2.1) à une distance du premier dans le sens de la longueur de l'axe de commande (4).

5. Vanne de réglage du gaz et de sécurité pour brûleurs d'un système de chauffage à gaz modulable, disposant d'au moins deux éléments de fermeture, positionnés dans un boîtier (1) entre un conduit d'admission (2) et un conduit d'émission (3), le premier élément de fermeture - commandé par une commande linéaire - disposant d'un axe de commande (4), d'un corps d'étranglement (6., 6.1) positionné à l'extrémité inférieure de l'axe de commande ainsi qu'un premier élément ressort (5) précontraint agissant sur le premier élément de fermeture, positionné dans la région supérieure de l'axe de commande (4), **caractérisée en ce que** les deux éléments de fermeture se trouvent dans une position orthogonale l'un par rapport à l'autre et que le deuxième élément de fermeture - actionné par commande magnétique - disposant d'un corps de fermeture (8, 8.1) est lié à un induit creux (7) se trouvant dans une cavité cylindrique (19) entouré par le bobinage d'excitation de l'induit creux (7) placé de manière amovible et actionnant contre la force d'un deuxième élément ressort (9) par deux éléments de couplage (16) liés par un élément déflecteur (17).

6. Vanne de réglage du gaz et de sécurité selon la revendication 5. **caractérisée en ce que** l'élément déflecteur (17) dispose d'un axe de pivotement (18) et de deux branches dont l'une dans une position orthogonale par rapport à l'autre et dans lesquelles les éléments de couplage (16) s'accrochent par engagement positif.

7. Vanne de réglage du gaz et de sécurité selon une des revendications 5 ou 6, **caractérisée en ce qu'** elle est pourvue d'une chambre de flux (2.1) rattachée au conduit d'admission (2) dans le sens du flux du gaz, le corps de fermeture (8) étant axialement amovible dans la chambre de flux (2.1) entre une position d'ouverture et une position de fermeture.

8. Vanne de réglage du gaz et de sécurité selon une des revendications 2, 4 ou 7, **caractérisée en ce que** le corps de fermeture (8) dispose d'un élément d'étanchéité annulaire ayant une surface d'étanchéité courbée ou plane orientée vers le siège de vanne complémentaire du corps de fermeture (8), l'élément d'étanchéité, à l'état de fermeture, fermant de manière étanche au gaz toute la surface du passage annulaire (3.1) entourant la chambre de flux (2.1) au moins partiellement.

9. Vanne de réglage du gaz et de sécurité selon une des revendications 2, 4 oder 7, **caractérisée en ce que** le corps de fermeture (8) dispose d'un élément d'étanchéité (8.1) annulaire ayant, en coupe transversale, la forme d'un V, les branches du V s'ouvrant dans le sens du siège de vanne (11.1) du corps de fermeture (8), les branches en V élastiques déformables sous l'action de la force exercée par l'élément ressort (9) fermant de manière étanche au gaz le passage annulaire (3.1) le long de la ligne d'appui des branches en V.
